# EUROPÄISCHE PATENTSCHRIFT

(11) **EP 3 306 639 B1**
(45) Veröffentlichungstag und Bekanntmachung des Hinweises auf die Patenterteilung: **19.03.2025**
(21) Anmeldenummer: 16192722.3
(22) Anmeldetag: 07.10.2016
(51) Int. Cl.: H01J 49/00, H01J 49/16, G01B 11/24, G01B 11/06

(54) **VERFAHREN ZUR MASSENSPEKTROMETRISCHEN ANALYSE UND DREIDIMENSIONALEN ABBILDUNG DER OBERFLÄCHE VON PROBEN**
METHOD FOR MASS SPECTROMETRIC ANALYSIS AND THREE-DIMENSIONAL IMAGING OF THE SURFACE OF SAMPLES
MÉTHODE D'ANALYSE EN SPECTROMÉTRIE DE MASSE ET IMAGERIE TRIDIMENSIONNELLE DE LA SURFACE D'ÉCHANTILLONS

(43) Veröffentlichungstag der Anmeldung: 11.04.2018
(73) Patentinhaber: Justus-Liebig-Universität Gießen, 35390 Gießen (DE)
(72) Erfinder: Spengler, Bernhard, 35440 Linde (DE); Kompauer, Mario, 35390 Gießen (DE)
(74) Vertreter: Patentanwälte Olbricht, Buchhold, Keulertz Partnerschaft mbB

(56) Entgegenhaltungen:
- EP-A2- 1 739 719
- WO-A1-2016/090356
- US-A1- 2008 149 822
- US-B1- 7 180 058
- SPENGLER B ET AL: "Scanning microprobe matrix-assisted laser desorption ionization (SMALDI) mass spectrometry: instrumentation for sub-micrometer resolved LDI and MALDI surface analysis", JOURNAL OF THE AMERICAN SOCIETY FOR MASS SPECTROMETRY, ELSEVIER SCIENCE INC, US, vol. 13, no. 6, 1 June 2002 (2002-06-01), pages 735 - 748, XP004356711, ISSN: 1044-0305, DOI: 10.1016/S1044-0305(02)00376-8

## Beschreibung

Die Erfindung beschreibt ein Verfahren, um die chemische Zusammensetzung und die dreidimensionale Struktur von Oberflächen von Proben zu messen und zu analysieren.

### Beschreibung und Einleitung des allgemeinen Gebietes der Erfindung

Ziel der ortsaufgelösten (bildgebenden) mikroskaligen Oberflächenanalytik ist es, die chemische Zusammensetzung einer Probe (z.B. eines biologischen Gewebes oder Objektes) mit hoher lateraler Auflösung qualitativ und/oder quantitativ abzubilden. Mikroskalig bedeutet in diesem Zusammenhang, dass die Größe eines Messpunktes zwischen 0,5 µm bis 10 µm beträgt.

Als Probe wird hierbei die Gesamtheit des zu untersuchenden Materials bezeichnet. Dieses Material kann als chemischer Stoff oder Stoffgemisch flüssig (wie Trinkwasserproben, Urinproben) oder fest (wie eine Gesteinsprobe) oder ein Gemisch unterschiedlicher Aggregatzustände (beispielsweise eine feuchte Bodenprobe) sein. Bei einer ortsaufgelösten (bildgebenden) mikroskaligen Oberflächenanalytik werden Proben im festen Aggregatzustand untersucht.

Anders als ein optisches Mikroskopbild zeigt ein solches analytisches Bild die Mengenverteilung eines bestimmten Stoffes innerhalb der Probe an. Hierbei sind Verfahren üblich, welche es ermöglichen, die chemische Zusammensetzung auf ebenen Proben zu bestimmen und diese in zweidimensionalen Darstellungen der chemischen Zusammensetzung zu verbildlichen, sowie aus einer Vielzahl zweidimensionaler Bilder (Messungen) dreidimensionale chemische Verteilungsbilder zu erzeugen. Unter diesen Methoden befinden sich lasergestützte massenspektrometrische Verfahren, wie die Laserdesorptions/lonisations-Massenspektrometrie (LDI- MS), die matrix-unterstützte Laserdesorptions/lonisations-Massenspektrometrie (MALDI-MS) sowie die Sekundärionen-Massenspektrometrie (SIMS), aber auch die Laserablations-Nachionisations-Massenspektrometrie.

Desorption bezeichnet hierbei den Vorgang, bei dem (vorwiegend) ungeladene Atome oder Moleküle die Oberfläche eines Festkörpers verlassen.

Ionisation heißt jeder Vorgang, bei dem aus einem Atom oder Molekül ein oder mehrere Ladungsträger entfernt oder ihnen hinzugefügt werden, so dass das Atom oder Molekül als positiv oder negativ geladenes Ion zurückbleibt.

### Stand der Technik

Ein übliches MALDI-MS-Verfahren zur zweidimensionalen Kartierung von Konzentrationen spezifischer Moleküle wird beispielsweise in der Schrift US 5,808,300 A1 beschrieben. Hierbei wird die Probenoberfläche in einzelne Messpunkte unterteilt und je ein definierter Punkt der Probenoberfläche mit einem fokussierten Laserstrahl beschossen und die freigesetzten Ionen detektiert. Dies wird dann für jeden anderen Punkt der Probenoberfläche wiederholt. Es ist dabei nicht möglich, gleichzeitig Informationen über die Topographie der Probe und deren Oberflächenzusammensetzung zu gewinnen. Es gibt keine Verknüpfung zwischen der zweidimensionalen, räumlichen Verteilung eines Stoffes und der Topographie einer Probe. Topographie meint hier die Höhe, bzw. Dicke einer Probe an einem bestimmen Ort.

Im Gegensatz dazu liefert die konfokale Laser-Raster-Mikroskopie zwar ein dreidimensionales Bild, jedoch keine direkte Information über die chemische Zusammensetzung der Probe.

EP 1 739 719 A2 offenbart ein Verfahren zur Erzeugung einer scharfen, hochauflösenden Abbildung eines Bereichs auf einer Probenplatte für eine Ionenquelle, um beispielweise zu untersuchende Analyten zu identifizieren, die mit einem ionisierenden Laser herausgelöst werden sollen. Dazu wird der Bereich der Probenplatte im Sichtfeld einer Abbildungsvorrichtung positioniert. Anschließend wird eine Vielzahl von Bildern mit unterschiedlicher Schärfentiefe erstellt, die zu einem zwei- oder dreidimensionalen hochauflösenden Gesamtbild zusammengesetzt werden.

WO 2016 090 356 A1 beschreibt ein Massenzytometriesystem in Form eines LA-ICP-MS zur Abbildung einer biologischen Probe, mit einem Festkörperlaser zur Erzeugung eines Laserstrahls für die Ablation der biologischen Probe in einer Ablationskammer. Der Laserstrahl wird mittels einer optischen Anordnung auf die Probe fokussiert, wobei die Probe auf einem beweglichen Probenträger angeordnet ist. Ein induktiv mit der Ablationskammer gekoppeltes Plasma nimmt die abgetragenen Teile der biologischen Probe auf, die anschließend einem Massenspektrometer zugeführt werden.

In der Veröffentlichung "Scanning Microprobe Matrix-Assisted Laser Desorption Ionization (SMALDI) Mass Spectrometry: Instrumentation for Sub-Micrometer Resolved LDI and MALDI Surface Analysis" von Spengler et al, in American Society for Mass Spectrometry, 2002 wird eine Vorrichtung und ein Verfahren für die lateral aufgelöste massenspektrometrische Oberflächenanalyse beschrieben. Die Vorrichtung ermöglicht die bildliche Darstellung der Verteilung ausgewählter Probenkomponenten von natürlichen und künstlichen Oberflächen. Die Proben werden entweder durch Flugzeit-Massenspektrometrie mit Laserdesorption und Ionisierung (LDI) oder nach der Vorbereitung mit einer geeigneten Matrix durch Matrix-unterstützte Massenspektrometrie mit Laserdesorption und Ionisierung (MALDI) analysiert.

US 2008 149 822 A1 kombiniert in einem System und einem Verfahren zur Analyse und Abbildung einer Probe modifizierte MALDI-Massenspektrometer und SNOM-Vorrichtungen. Das System umfasst einen Ionisationsbereich, einen Probenhalter, einen Laser sowie ein Massenspektrometer mit einer Vakuumkammer. Eine Atmosphärendruckschnittstelle verbindet den Ionisationsbereich mit dem Massenspektrometer. Ein optisches Nahfeldmikroskopieinstrument (SNOM) tastet mit einer Nahfeldsonde die Probe ab. Eine Plattform mit dem Probenhalter ist über eine Steuerung in einen Abstand innerhalb des Nahfeldabstandes der Nahfeldsonde bewegbar, wobei eine Aufzeichnungsvorrichtung den Abstand zwischen der Sonde und Probe erfasst.

US 7 180 058 B1 offenbart eine MALDI/LDI-Quelle, die eine ionenoptische Vorrichtung und eine Strahlfokussierungsoptik umfasst, die auf gegenüberliegenden Seiten eines örtlich durchlässigen Probenträgers angeordnet sind. Ein Laser, der sich in der Nähe der Rückseite des Probenträgers befindet, sendet einen Strahl aus, der durch eine Strahlfokussierungsoptik fokussiert wird und den transparenten Bereich des Probenträgers durchquert, um auf die Probe aufzutreffen. Die durch die Bestrahlung der Probe erzeugten Ionen werden von einer optischen lonenvorrichtung aufgefangen, die sich in der Nähe der vorderen Oberfläche des Probenträgers befindet.

### Aufgabe

Aufgabe der Erfindung ist es, ein Verfahren zur Ermöglichung einer gleichzeitigen Analyse der zweidimensionalen, räumlichen chemischen Zusammensetzung und der Topographie einer Probe bereitzustellen.

### Lösung der Aufgabe

Diese Aufgabe wird erfindungsgemäß gelöst durch ein Verfahren mit den Merkmalen des Anspruchs 1. Vorteilhafte Ausführungsformen und Weiterbildungen der vorliegenden Erfindung ergeben sich aus den Unteransprüchen.

Eine Vorrichtung 100, 200, die nicht Gegenstand der Erfindung ist, zur Durchführung des erfindungsgemäßen Verfahrens ist für die Verwendung mit verschiedenen Massenspektrometern vorgesehen. Sie kann mit allen dem Fachmann bekannten Massenspektrometern verwendet werden, die über ein Atmosphären- druck-Einlasssystem verfügen oder bei erniedrigtem oder erhöhtem Druck im Probenraum arbeiten. Dazu zählen unter anderen: Quadrupol-, lonenfallen-, lonencyclotron- und Orbitalfallen-Massenspektrometer, sowie Time of Flight (TOF) Massenspektrometer. Die Vorrichtung eignet sich dabei für alle Methoden der Desorption und/oder Ionisierung von Oberflächen (Desorptionsverfahren), beispielsweise für LDI (Laserdesorptions-Ionisierung), MALDI (Matrix-assistierte Laserdesorptions-Ionisierung) und Laser-Ablation mit Nachionisierung. Die Vorrichtung 100, 200 zur massenspektrometrischen Analyse und dreidimensionalen Abbildung der Oberfläche von Objekten umfasst dabei wenigstens eine Energiequelle 20, 10 zur Desorption oder Desorption und Ionisation von Atomen der Oberfläche einer Probe mittels eines Desorptions-/Ionisationsstrahls 2 und deren Weiterleitung in ein Massenspektrometer 7.

Weiterhin umfasst die Vorrichtung 100, 200 einen Verschiebetisch 1, welcher so ausgebildet ist, dass auf ihm eine zu untersuchende Probe aufgebracht werden kann und wobei der Strahlengang der Energiequelle 20, 10 und der Verschiebetisch 1 relativ zueinander beweglich ausgeführt sind.

Weiterhin umfasst die Vorrichtung 100, 200 eine Schnittstelle 50, um Daten mit einem Massenspektrometer 7 austauschen zu können. Dabei ist die Schnittstelle 50 so ausgebildet, dass Messdaten über die chemische Zusammensetzung der Oberfläche der Probe an einem Messpunkt 60, von einem Massenspektrometer über die Schnittstelle 50 an die Auswerteeinheit 40 übermittelt werden können, sodass die chemische Zusammensetzung für den Messpunkt 60 durch die Auswerteeinheit 40 bestimmt werden kann. Bei der Schnittstelle 50 kann es sich beispielsweise um eine ISA-, PCI-, USB- oder ElA-232-Schnittstelle handeln. Eine Schnittstelle zur kabellosen Datenübermittlung wie WLAN, Wi-Fi, IEEE 802.11 oder Bluetooth ist ebenfalls möglich.

Weiterhin umfasst die Vorrichtung 100, 200 eine Lichtquelle 8, 10, mindestens ein erstes optisches System 3 und mindestens einen Lichtdetektor 4 und ein Auswerteeinheit 40. Diese sind so ausgebildet, dass von der Lichtquelle 8, 10 ein Messpunkt 60 auf der Probe beleuchtet und vom Messpunkt 60 reflektiertes oder gestreutes Licht vom Lichtdetektor 4 erfasst wird, sodass die Oberfläche einer Probe dreidimensional er- fasst und die Topographie dieser Oberfläche durch die Auswerteeinheit 40 bestimmt werden kann.

Der Lichtdetektor 4 besteht dabei vorzugsweise aus einem Bauelement, mit dem positionsempfindlich Strahlung wahrgenommen werden kann (z.B. ein Quadranten-Detektor, ein positionsempfindlicher Detektor, ein CCD-Sensor oder ein Videokamera-Chip).

Das erste optische System 3 umfasst vorzugsweise ein oder mehrere der folgenden Bauteile: Linsen, Blenden, Spiegel, Filter, telezentrische Objektive, Lichtleiter. Diese(s) ist/sind dabei so angeordnet, dass das Licht der Lichtquelle 8, 10 auf dem Weg von der Probenoberfläche zum Lichtdetektor 4 so geformt oder geleitet werden kann, dass dieser optimal das reflektierte und/oder gestreute Licht verarbeiten kann.

Weiterhin umfasst die Vorrichtung 100, 200 eine Steuereinheit 30 zur Steuerung des Verschiebetisches 1, der Energiequelle 20, 10 und der Lichtquelle 8, 10, wobei diese so ausgebildet ist, dass die Oberfläche einer Probe punkteweise von der Energiequelle 20 und der Lichtquelle 8, 10 bestrahlt werden kann.

In einer zweiten Ausführungsform der Vorrichtung 100, 200 ist die Energiequelle 10, 20 als ein Desorptions- oder lonisationslaser ausgeführt. Die bevorzugte Wellenlänge liegt hierbei im ultravioletten, sichtbaren oder infraroten Bereich. Typische verwendete Laser sind KrF-Excimerlaser (A = 248 nm) und frequenzvervierfachte Nd:YAG Laser (A = 266 nm). Im Gegensatz zu anderen Ionisationsmethoden (z.B. Elektrospray-Ionisation (ESI), Chemische Ionisation bei Atmosphärendruck (APCI)) erlauben Laser als Energiequelle 10,20 die Erzeugung von Ionen unabhängig von elektrischen Feldern, da Ionen nur im Laserstrahl gebildet werden können. Es ist jedoch auch möglich eine andere Energiequelle (20) z.B. einen Elektrospray-Strahler oder eine Primärionen- oder Neutralteilchenquelle zu verwenden.

In einer dritten Ausführungsform der Vorrichtung 100, 200 ist die Lichtquelle 8, 10 als ein Laser ausgeführt. Die bevorzugte Wellenlänge liegt hier- bei im sichtbaren optischen Bereich bei 320 nm bis 750 nm Wellenlänge. Dieser Wellenlängenbereich stellt einen Kompromiss aus möglichst hoher Auflösung und möglichst geringer Beeinflussung der Oberfläche dar.

In einer vierten Ausführungsform der Vorrichtung 100, 200 umfasst diese weiterhin einen lonenführungskanal 6 zur Leitung von Ionen, die durch die Energiequelle 20, 10 von der Oberfläche einer Probe freigesetzt werden. Dieser ist so ausgebildet, dass Ionen gezielt zu einem angeschlossenen Massenspektrometer 7 geführt werden können.

In einer fünften Ausführungsform der Vorrichtung 100, 200 umfasst diese weiterhin ein Fokussiersystem 11 zur Fokussierung der Strahlung der Energiequelle 20, 10 auf die Oberfläche einer Probe. Dabei kann das Fokussierungssystem 11 ein oder mehrere der folgenden Bauteile umfassen: Spiegel, Linsen, Blenden, Filter, Lichtleiter, Linse mit zentraler Bohrung 5, telezentrische Objektive.

In einer sechsten Ausführungsform umfasst die Vorrichtung 100, 200 weiterhin ein zweites optisches System 12, namentlich ein Fokussierungssystem 12 zur Fokussierung der Strahlung der Lichtquelle 8 auf die Oberfläche einer Probe. Das ermöglicht es, dass nur der mikroskalige Messpunkt 60 beleuchtet wird und es nicht zu Streusignalen aus angrenzenden Bereichen kommt. Dies ist insbesondere von Bedeutung, wenn die Lichtquelle keine interne Optik umfasst. Dabei kann das zweite Fokussierungssystem ein oder mehrere der folgenden Bauteile umfassen: Spiegel, Linsen, Blenden, Filter, Lichtleiter, Linsen mit zentraler Bohrung 5, telezentrische Objektive.

Das Fokussierungssystem 12 für die Lichtquelle 8 und das Fokussierungssystem 11 für die Energiequelle 20 können einzeln und in Kombination eingesetzt werden. Ihre Steuerung erfolgt über die Steuereinheit 30.

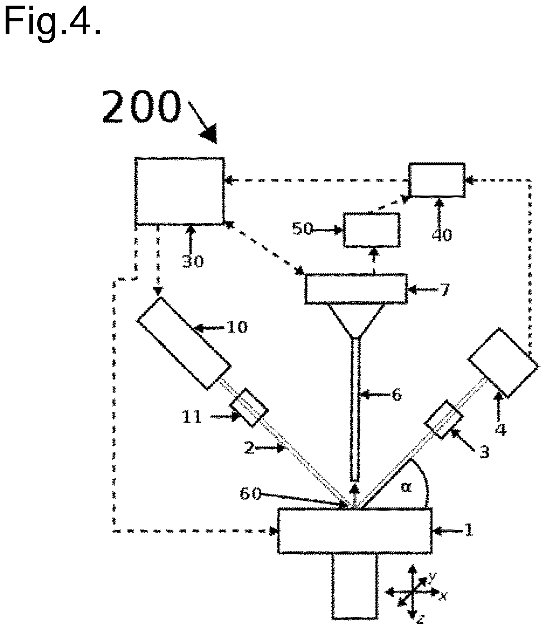

In einer siebten Ausführungsform der Vorrichtung 200 werden die Energiequelle 10 zur Desorptions-/Ionisation und die Lichtquelle 10 durch denselben Laser gebildet. (Fig.4). Das ermöglicht eine einfachere und kostengünstigere Konstruktion der Vorrichtung. Hierbei wird bevorzugt für diese Lichtquelle/Energiequelle 10 ein einheitliches Fokussierungssystem verwendet um einen Messpunkt 60 präzise bestrahlen zu können. Dabei kann das Fokussierungssystem aus Spiegeln, Linsen, Blenden, Filtern, Lichtleitern, Linsen mit zentraler Bohrung 5, sowie telezentrischen Objektiven aufgebaut sein.

Vorzugsweise ist der Lichtdetektor 4 der Vorrichtung 100, 200 so ausgebildet, dass er in einem Winkel α von mehr als 0° (bevorzugt mehr als 45°) relativ zur Probenoberfläche positioniert ist, wobei dieser ein Messbild von der Probenoberfläche und/oder dem Messpunkt 60 erzeugt.

Das erfindungsgemäße Verfahren zur massenspektrometrischen Analyse und Abbildung der Oberfläche einer Probe sieht vor,
a) dass eine zu untersuchende Probe auf dem Verschiebetisch angebracht wird, wobei sich die Probe auf einem Probenträger auf dem Verschiebetisch befindet,
b) dass die zu untersuchende Probe durch Bewegung des Verschiebetisches oder der Energiequelle punktförmig im Scanning-Betrieb schrittweise oder in kontinuierlicher Bewegung untersucht wird,
c) wobei für diese mikroskalige rasternde Untersuchung eine Arbeitsebene des Objekts definiert wird,
d) wobei ein mikroskaliger Messpunkt von der Lichtquelle erzeugt und durch das zweite optische System auf der Probe abgebildet wird,
e) wobei der reflektierte/gestreute Messstrahl der Lichtquelle durch das erste optische System auf dem Lichtdetektor abgebildet wird,
f) wobei die Position der Abbildung des Messpunktes auf dem Lichtdetektor von der Auswerteeinheit ausgewertet wird, und
g) wobei die relative Positionsänderung des Messpunktes berechnet und aus dieser Information die Abweichung der z-Position von der definierten Arbeitsebene des Objekts berechnet wird,
h) dass mit Hilfe dieser Abweichung die aktuelle z-Position des Objekts im Messpunkt in die vorgegebene Arbeitsebene bewegt wird,
i) wobei der Verschiebungswert als Höheninformation für den Messpunkt gespeichert wird,
j) dass eine chemische Information (chemische Zusammensetzung) des Messpunktes auf der Oberfläche des Objekts mit einer Nachweismethode aufgezeichnet wird,
k) wobei der Desorptionsstrahl der Energiequelle - nach dem Anfahren der Arbeitsebene für den Messpunkt - genutzt wird, um aus dem mikroskaligen Messpunkt Analytmaterial zu desorbieren und zu ionisieren oder in einem folgenden Schritt zu ionisieren, und
l) wobei sich die Ionen zu einem lonenführungskanal des Massenspektrometers bewegen, wobei der lonenführungskanal zur Leitung von Ionen ausgebildet ist, die durch die Energiequelle von der Oberfläche einer Probe freigesetzt wurden, und
m) dass nach dem Rastern der Probenoberfläche durch Bewegen des Verschiebetischs in x- und y-Richtung und durch Regulation der z-Koordinate für jeden Messpunkt die Topografie der Probenoberfläche durch Auswerten der z-Koordinate abgebildet wird, wobei die massenspektrometrische Analyse der Ionen aus jedem mikroskaligen Messpunkt die chemische Information über die Zusammensetzung der Probe liefert.

In dem erfindungsgemäßen Verfahren zur massenspektrometrischen Analyse und Abbildung der Oberfläche einer Probe mit einer Vorrichtung 100, 200 gemäß einem der oben genannten Ausführungsformen, wird die zu untersuchende Probe durch Bewegung des Verschiebetisches oder der Energiequelle 20 punktweise im Scanning-Betrieb untersucht. Scanning Betrieb heißt hierbei das systematische, regelmäßige Abtasten bzw. Vermessen der Oberfläche, entweder in einem schrittweisen Punkt-für-Punkt-Ablauf oder in einem zeitlich synchronisierten kontinuierlichen Ablauf der Bewegung des Verschiebetisches oder der Energiequelle und einer daraus erzeugten Konstruktion eines Rasterbildes. Die Hauptidee ist, mit relativ begrenzten Messinstrumenten durch eine Vielzahl von Einzelmessungen ein Gesamtbild der Oberfläche zu erlangen. Dazu wird zu jedem Messpunkt immer auch dessen x und y Koordinate bestimmt. Die x und die y Koordinate beschreiben die Position eines Punktes auf einer Ebene, welche parallel zur Oberfläche der Probe liegt.

In einer zweiten Ausführungsform des Verfahrens wird zusätzlich die z-Koordinate bzw. die z-Position einzelner Punkte der Probenoberfläche bestimmt. Als z-Koordinate wird hier die Raumrichtung senkrecht zur Oberfläche der Probe angenommen.

In einer dritten Ausführungsform des Verfahrens dienen die Ausgangsignale des Lichtdetektors der Vorrichtung der Steuerung des Scanning-Betriebs, wobei eine Rasterung (Bewegung in xy-Ebene) und eine Bestimmung der Topografie mittels Auswertung der z-Koordinate vorgenommen werden.

In einer vierten Ausführungsform des Verfahrens wird zur Realisierung des Scanning-Betriebs die Position des Verschiebetisches 1 durch die Steuereinheit 30 gezielt verändert.

In einer fünften Ausführungsform des Verfahrens wird zur Realisierung des Scanning-Betriebs die Position des Abbildungssystems zur Fokussierung der Energiequelle 20, 10 durch die Steuereinheit 30 gezielt verändert.

In einer sechsten Ausführungsform des Verfahrens werden aus der zu untersuchenden Probe massenspektrometrische Rohdaten gewonnen. Wobei unter den massenspektrometrischen Rohdaten zu einem Messpunkt 60 die Verhältnisse von Masse zu Ladungszahl, die lonensignal-Intensitäten sowie die Koordinaten (x, y, z) zu verstehen sind.

In einer siebten Ausführungsform des Verfahrens wird eine mehrdimensionale Datenmatrix erzeugt, indem jedem detektierten massenspektrometrischen Signal die errechneten Masse-zu-Ladungszahl-Zentroiden, Intensitäten und kartesischen Koordinaten zugeordnet werden.

In einer achten Ausführungsform des Verfahrens werden Höhen- und Verteilungsinformation in Graustufen- oder Farbkodierungen übersetzt und bildliche Darstellungen erzeugt.

### Auswertungsverfahren:

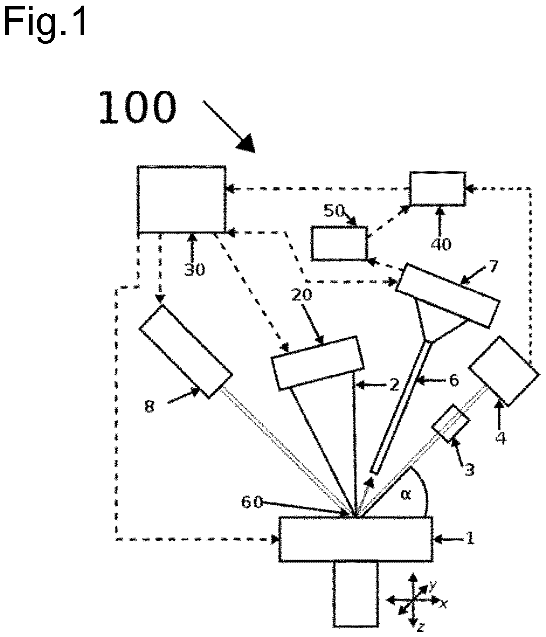

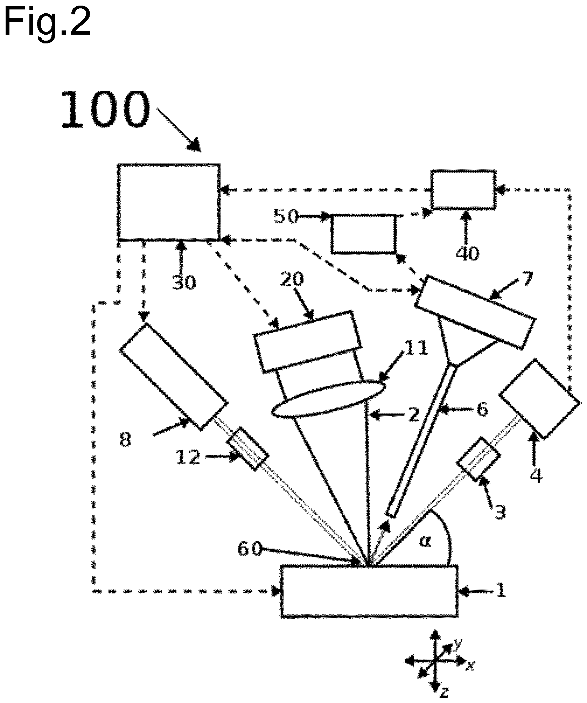

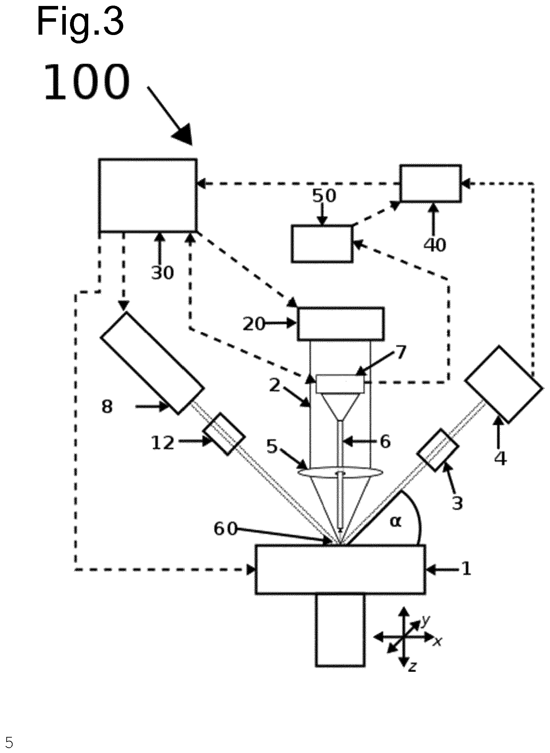

Für die Durchführung des Auswertungsverfahrens wird zunächst eine zu untersuchende Probe auf einem Verschiebetisch 1 angebracht. Dabei befindet sie sich vorzugsweise auf einem Probenträger auf dem Verschiebetisch 1. In den Abbildungen Fig.1, 2, 3 und 4 wird gezeigt, wie ein mikroskaliger Messpunkt 60 von einer Lichtquelle 8, 9, 10 erzeugt und durch ein zweites optisches System 12 auf die Probe abgebildet wird. Der reflektierte/gestreute Messstrahl der Lichtquelle 8, 10 wird durch ein erstes optisches System 3 auf den Lichtdetektor 4 abgebildet. Die Position der Abbildung des Messpunktes auf dem Lichtdetektor 4 wird von der Auswerteeinheit 40 ausgewertet. Die relative Positionsänderung des Messpunktes wird berechnet und aus dieser Information die Abweichung der z-Position von der zuvor für die mikroskalig rasternde Untersuchung definierten Arbeitsebene des Objektes berechnet. Mithilfe dieses Wertes wird die aktuelle z-Position des Objektes im Messpunkt in die vorgegebene Arbeitsebene bewegt. Der Verschiebungswert wird als Höheninformation für den Messpunkt gespeichert. Die chemische Information (chemische Zusammensetzung) des Messpunktes auf der Oberfläche des Objektes wird mit einer geeigneten Nachweismethode aufgezeichnet, wie zum Beispiel der Laserdesorptions- /ionisations-Massenspektrometrie (LDI-MS) oder der matrixunterstützten Laserdesorptions /ionisations-Massenspektrometrie (MALDI-MS), der Sekundärionen-Massenspektrometrie (SIMS) oder der Desorptions-Elektrosprayionisations-Massenspektrometrie (DESI-MS). Laserbasierte ortsaufgelöste Methoden besitzen bei hoher räumlicher Auflösung (d.h. bei kleinen Messpunkten) eine hohe numerische Apertur und damit eine geringe Tiefenschärfe (Schärfentiefe). Für eine massenspektrometrische Untersuchung des Messpunktes muss daher die Arbeitsebene für den jeweiligen Messpunkt mit hoher Genauigkeit angefahren werden. Andere Desorptions/lonisationsverfahren besitzen teilweise andere geometrische Randbedingungen für eine erfolgreiche Analyse eines Messpunktes, die ebenfalls das Anfahren der Arbeitsebene erfordern. Für DESI-MS müssen z.B. die Winkel und Abstände zwischen DESI-Strahl, Probenmesspunkt und Einlassöffnung des Massenspektrometers eingehalten werden.

In den Abbildungen Fig.1, 2, 3, 4 kann der Probenträger auch in einem Winkel abweichend von den gezeigten Winkeln stehen.

### Bildanalyseverfahren

In einer alternativen Ausführungsform des erfindungsgemäßen Verfahrens wird ein Lichtdetektor 4 mit einem ersten optischen System 3 in einem Winkel α von mehr als 0° relativ zur Probenoberfläche positioniert. Die Probenoberfläche wird durch die Lichtquelle 8, 9, 10 illuminiert. Durch Auswertung der Information der beleuchteten, abgebildeten Probenoberfläche wird die optimale Fokusebene des Desorptions-/ lonisationsstrahls 2 der Energiequelle 20 bestimmt. Bei korrekter Anordnung entspricht z.B. der höchste Kontrastwert oder die maximale Standardabweichung eines 5x5 Pixel umfassenden Bildbereichs der Fokusebene des Desorptions-/Ionisationsstrahls 2. Der Kontrastwert C ist zum Beispiel gegeben durch C = (I_{MAX}-I_{A})/I_{A}, wobei I_{MAX} die maximale Intensität des von der Probe detektierten Bildes und I_{A}, die durchschnittliche Intensität des von der Probe detektierten Bildes sind. Durch das Messen der Position z.B. des höchsten Kontrastwerts oder der größten Standardabweichung, relativ zum Messpunkt kann die z-Position korrigiert werden, um die Probe im Messpunkt in die Fokusebene des lonisationslasers zu bewegen. Aus dem Verfahrweg des Verschiebetisches in der z-Koordinate wird die Höheninformation abgeleitet. Des Weiteren ist es möglich, durch systematische Iteration und Fokusvariation die Position des höchsten Kontrasts oder der größten Standardabweichung zu bestimmen. Aus dieser Information kann ebenfalls die z-Position für den gegebenen Messpunkt abgeleitet werden. In der Ausführungsform der Vorrichtung wie sie in Fig.4 gezeigt wird, kann des Weiteren der durch den Desorptions-/lonisationsstrahl der Energiequelle 10 erzeugten Messpunkt 60 auf der Probe direkt zur Bestimmung der Höheninformation verwendet werden.

Nachdem durch eines der beschriebenen Verfahren die Arbeitsebene für den Messpunkt angefahren wurde, wird der gewählte Desorptionsstrahl genutzt, um aus dem mikroskaligen Messpunkt Analytmaterial zu desorbieren und zu ionisieren oder in einem folgenden Schritt zu ionisieren. Die Ionen bewegen sich zum lonenführungskanal 6 eines der beschriebenen Massenspektrometer 7. Durch die massenspektrometrische Analyse werden direkt Informationen über die chemische Zusammensetzung des mikroskaligen Messpunkts erhalten.

Für jeden Messpunkt wird somit zunächst die z-Position des Messpunktes in die Arbeitsebene bewegt und damit die Probenhöhe am Messpunkt bestimmt. Anschließend wird die massenspektrometrische Analyse zur Bestimmung der chemischen Zusammensetzung durchgeführt, bevor der nächste Messpunkt angefahren und dieser wiederum auf Höheninformation und chemische Information untersucht wird. Nach Rastern der Probenoberfläche durch Bewegen in x und y Richtung und durch Regulation der z-Koordinate für jeden Messpunkt wird die Topografie der Probenoberfläche durch Auswerten der z-Koordinaten abgebildet. Die massenspektrometrische Analyse der Ionen aus jedem mikroskaligen Messpunkt liefert die chemische Information über die Zusammensetzung.

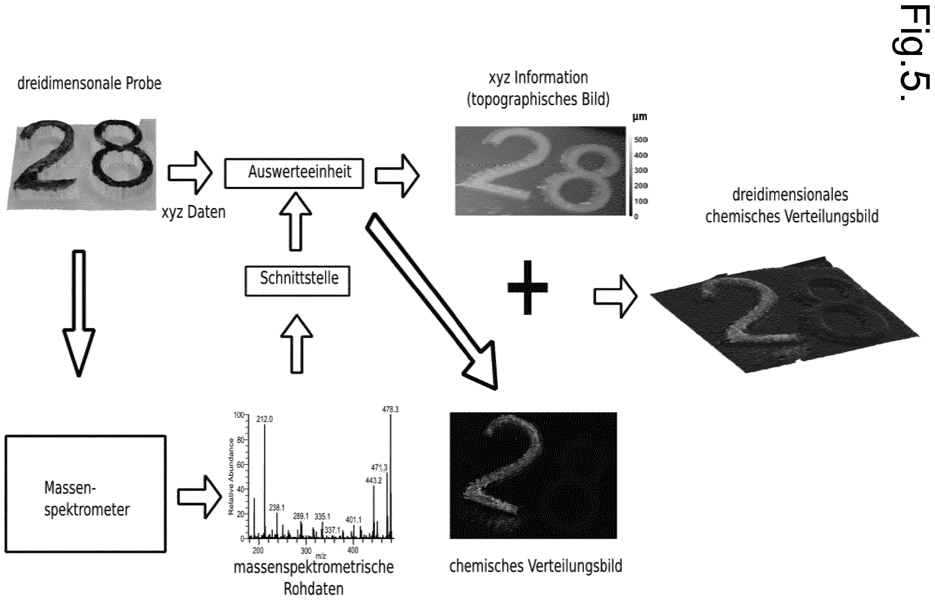

Die erhaltene multidimensionale Information ( Topographie, ortsabhängige chemische Verteilung und chemische Zusammensetzung) wird mit der entwickelten Software ausgewertet und in mehrdimensionalen Darstellungen verbildlicht (Fig. 5.).

In einer weiteren Ausführungsform ist es vorgesehen die Vorrichtung und das Verfahren in der Flugzeitmassenspektrometrie zu verwenden.

Alternativ ist es vorgesehen die Vorrichtung in der Quadrupol-, lonenfallen-, lonencyclotronresonanz- oder Orbitalfallen-Massenspektrometrie zu verwenden.

### Abbildungslegenden und Bezugszeichenliste

**Fig. 1** zeigt eine Vorrichtung 100 zur Durchführung des erfindungsgemäßen Verfahrens.
**Fig. 2** zeigt die Vorrichtung 100 in einer weiteren Ausführungsform unter Verwendung eines Fokussierungssystems 12 für eine Lichtquelle 8 und eines Fokussierungssystems 11 für eine Energiequelle 20.
**Fig. 3** zeigt die Vorrichtung 100 in der Ausführungsform unter Verwendung einer durchbohrten Linse 5.
**Fig. 4** zeigt die Vorrichtung 200 in der Ausführungsform, dass der Desorptions/lonisationslaser auch als Lichtquelle zur Höhenbestimmung genutzt wird.
**Fig. 5** stellt den Verlauf der Datenauswertung dar. Die von der Vorrichtung 100, 200 erzeugte Ortsinformation (x,y und z Koordinate) wird in die Auswerteeinheit eingelesen. Die vom Massenspektrometer 7 generierten massenspektrometrischen Rohdaten werden ebenfalls über die Schnittstelle in die Auswerteeinheit eingelesen. Die Auswerteeinheit generiert ein topographisches Bild und ein chemisches Verteilungsbild von der Probe. In einem weiteren Schritt werden das topographische Bild und das chemische Verteilungsbild in dreidimensionales chemisches Verteilungsbild umgewandelt und dargestellt.

### Bezugszeichenliste

- 1: Verschiebetisch
- 2: Desorptions-/Ionisationsstrahl der Energiequelle
- 3: erstes optisches System
- 4: Lichtdetektor
- 5: Linse mit zentraler Bohrung
- 6: Ionenführungskanal
- 7: Massenspektrometer
- 8,10: Lichtquelle
- 11, 12: zweites optisches System/Fokussierungssystem
- 100,200: Vorrichtung
- 20, 10: Energiequelle
- 30: Steuereinheit
- 40: Auswerteeinheit
- 50: Schnittstelle
- 60: Messpunkt

## Patentansprüche

1. Verfahren zur massenspektrometrischen Analyse und Abbildung der Oberfläche einer Probe mit einer Vorrichtung (100, 200) umfassend,
▪ wenigstens eine Energiequelle (20, 10) zur Desorption oder Desorption und Ionisation von Atomen oder Molekülen der Oberfläche einer Probe für eine Weiterleitung in ein Massenspektrometer (7),
▪ einen Verschiebetisch (1), welcher so ausgebildet ist, dass auf ihm eine zu untersuchende Probe befestigt werden kann und wobei der Strahlengang der Energiequelle (20, 10) und der Verschiebetisch (1) relativ zueinander beweglich ausgeführt sind,
▪ eine Lichtquelle (8, 10),
▪ eine Steuereinheit (30) zur Steuerung des Verschiebetisches (1), der Energiequelle (20, 10), der Lichtquelle (8, 10), wobei diese so ausgebildet ist, dass die Oberfläche einer Probe punktförmig an einem Messpunkt (60) von der Energiequelle (20, 10) und der Lichtquelle (8, 10), bestrahlt werden kann,
▪ eine Schnittstelle (50), um Daten mit einem Massenspektrometer austauschen zu können, wobei die Schnittstelle (50) so ausgebildet ist, dass Messdaten über die chemische Zusammensetzung der Oberfläche der Probe an einem Messpunkt (60), von einem Massenspektrometer über die Schnittstelle (50) an die Auswerteeinheit übermittelt werden können, sodass die chemische Zusammensetzung des Messpunktes (60) durch die Auswerteeinheit (40) bestimmt werden kann,
▪ wobei die Vorrichtung (100, 200) weiterhin ein erstes optisches System (3), einen Lichtdetektor (4) und eine Auswerteeinheit (40) umfasst, und
▪ wobei die Lichtquelle (8, 10), das erste optische System (3) und der Lichtdetektor (4) so ausgebildet sind, dass von der Lichtquelle (8, 10), über ein zweites optisches System (12) ein Messpunkt (60) auf einer Probe beleuchtet und vom Messpunkt (60) reflektiertes oder gestreutes Licht vom Lichtdetektor (4) mit vorgeschaltetem erstem optischem System (3) erfasst werden kann, und
a) dass eine zu untersuchende Probe auf dem Verschiebetisch (1) angebracht wird, wobei sich die Probe auf einem Probenträger auf dem Verschiebetisch (1) befindet,
b) dass die zu untersuchende Probe durch Bewegung des Verschiebetisches (1) oder der Energiequelle (20,10) punktförmig im Scanning-Betrieb schrittweise oder in kontinuierlicher Bewegung untersucht wird,
c) wobei für diese mikroskalige rasternde Untersuchung eine Arbeitsebene des Objekts definiert wird,
d) wobei ein mikroskaliger Messpunkt (60) von der Lichtquelle (8, 10) erzeugt und durch das zweite optische System (12) auf der Probe abgebildet wird,
e) wobei der reflektierte/gestreute Messstrahl der Lichtquelle (8, 10) durch das erste optische System (3) auf dem Lichtdetektor (4) abgebildet wird,
f) wobei die Position der Abbildung des Messpunktes auf dem Lichtdetektor (4) von der Auswerteeinheit (40) ausgewertet wird, und
g) wobei die relative Positionsänderung des Messpunktes berechnet und aus dieser Information die Abweichung der z-Position von der definierten Arbeitsebene des Objekts berechnet wird,
h) dass mit Hilfe dieser Abweichung die aktuelle z-Position des Objekts im Messpunkt (60) in die vorgegebene Arbeitsebene bewegt wird,
i) wobei der Verschiebungswert als Höheninformation für den Messpunkt (60) gespeichert wird,
j) dass eine chemische Information, chemische Zusammensetzung, des Messpunktes (60) auf der Oberfläche des Objekts mit einer Nachweismethode aufgezeichnet wird,
k) wobei der Desorptionsstrahl der Energiequelle (20, 10) - nach dem Anfahren der Arbeitsebene für den Messpunkt (60) - genutzt wird, um aus dem mikroskaligen Messpunkt (60) Analytmaterial zu desorbieren und zu ionisieren oder in einem folgenden Schritt zu ionisieren, und
l) wobei sich die Ionen zu einem lonenführungskanal (6) des Massenspektrometers (7) bewegen, wobei der lonenführungskanal (6) zur Leitung von Ionen ausgebildet ist, die durch die Energiequelle (20, 10) von der Oberfläche einer Probe freigesetzt wurden, und
m) dass nach dem Rastern der Probenoberfläche durch Bewegen des Verschiebetischs (1) in x- und y-Richtung und durch Regulation der z-Koordinate für jeden Messpunkt (60) die Topografie der Probenoberfläche durch Auswerten der z-Koordinate abgebildet wird, wobei die massenspektrometrische Analyse der Ionen aus jedem mikroskaligen Messpunkt (60) die chemische Information über die Zusammensetzung der Probe liefert.

2. Verfahren zur Analyse gemäß Anspruch 1, **dadurch gekennzeichnet, dass** die erhaltene multidimensionale Information, namentlich Topographie, ortsabhängige chemische Verteilung und chemische Zusammensetzung mit einer Software ausgewertet und in mehrdimensionalen Darstellungen verbildlicht wird.

3. Verfahren zur Analyse gemäß Anspruch 1 oder 2, **dadurch gekennzeichnet, dass** Ausgangsignale des Lichtdetektors bzw. Sensors die Vorrichtung im Scanning-Betrieb steuern, wobei eine Rasterung und eine Bestimmung der Topografie mittels Auswertung der z- Koordinate vorgenommen wird.

4. Verfahren zur Analyse gemäß einem der Ansprüche 1 bis 3, **dadurch gekennzeichnet, dass** zur Realisierung des Scanning-Betriebs die Position des Verschiebetisch durch die Steuereinheit (30) gezielt verändert wird.

5. Verfahren zur Analyse gemäß einem der Ansprüche 1 bis 4 **dadurch gekennzeichnet, dass** zur Realisierung des Scanning-Betriebs die Position des Fokussierungssystems (11) zur Fokussierung der Strahlung der Energiequelle (20,10) durch die Steuereinheit (30) gezielt verändert wird.

6. Verfahren zur Analyse gemäß einem der Ansprüche 1 bis 5, **dadurch gekennzeichnet, dass** aus den zu untersuchenden Substanzen massenspektrometrische Rohdaten gewonnen werden.

7. Verfahren gemäß einem der Ansprüche 1 bis 6 **dadurch gekennzeichnet, dass** eine mehrdimensionale Datenmatrix erzeugt wird, indem jedem detektierten massenspektrometrischen Signal die errechneten Masse-zu-Ladungszahl-Zentroiden, Intensitäten und kartesischen Koordinaten zugeordnet werden.

8. Verfahren zur Analyse gemäß einem der Ansprüche 1 bis 7 **dadurch gekennzeichnet, dass** die Höhen- und Verteilungsinformation in Graustufen- oder Farbkodierungen übersetzt und bildliche Darstellungen erzeugt werden.

## Claims

1. Method for mass spectrometrically analysing and imaging the surface of a sample with a device (100, 200) comprising
▪ at least one energy source (20, 10) for desorption or desorption and ionisation of atoms or molecules of the surface of a sample for onward transmission to a mass spectrometer (7),
▪ a translation stage (1) which is designed in such a way that a sample to be analysed can be mounted on it and wherein the beam path of the energy source (20, 10) and the translation stage (1) are designed to be movable relative to each other,
▪ a light source (8, 10),
▪ a control unit (30) for controlling the translation stage (1), the energy source (20, 10) and the light source (8, 10), wherein the latter is designed such that the surface of a sample can be irradiated in a point-like manner at a measuring point (60) by the energy source (20, 10) and the light source (8, 10),
▪ an interface (50) for exchanging data with a mass spectrometer, wherein the interface (50) is designed such that measurement data on the chemical composition of the surface of the sample at a measurement point (60) can be transmitted from a mass spectrometer to the evaluation unit via the interface (50), so that the chemical composition of the measurement point (60) can be determined by the evaluation unit (40),
▪ wherein the device (100, 200) further comprises a first optical system (3), a light detector (4) and an evaluation unit (40), and
▪ wherein the light source (8, 10), the first optical system (3) and the light detector (4) are designed such that a measuring point (60) on a sample can be illuminated by the light source (8, 10) via a second optical system (12) and light reflected or scattered from the measuring point (60) can be detected by the light detector (4) with upstream first optical system (3), and
a) that a sample to be analysed is placed on the translation stage (1), the sample being located on a sample carrier on the translation stage (1),
b) that the sample to be examined is examined by moving the translation stage (1) or the energy source (20, 10) in a point-like manner in scanning mode in steps or in continuous movement,
c) wherein a working plane of the object is defined for this microscale scanning examination,
d) wherein a microscale measuring point (60) is generated by the light source (8, 10) and imaged on the sample by the second optical system (12),
e) wherein the reflected/scattered measuring beam of the light source (8, 10) is imaged on the light detector (4) by the first optical system (3),
f) wherein the position of the image of the measuring point on the light detector (4) is analysed by the evaluation unit (40), and
g) wherein the relative change in position of the measuring point is calculated and the deviation of the z-position from the defined working plane of the object is calculated from this information, and working plane of the object is calculated,
h) this deviation is used to move the current z-position of the object in the measuring point (60) into the predetermined working plane,
i) whereby the displacement value is stored as height information for the measuring point (60),
j) wherein a chemical information chemical composition of the measuring point (60) on the surface of the object is recorded by a detection method,
k) wherein the desorption beam of the energy source (20, 10) - after moving to the working plane for the measuring point (60) - is used to desorb and ionise analyte material from the microscale measuring point (60) or to ionise it in a subsequent step, and
l) wherein the ions move to an ion guide channel (6) of the mass spectrometer (7), the ion guide channel (6) being designed to guide ions released from the surface of a sample by the energy source (20, 10), and
m) after scanning the sample surface by moving the translation stage (1) in the x and y directions and by regulating the z-coordinate for each measuring point (60), the topography of the sample surface is mapped by evaluating the z-coordinate, the mass spectrometric analysis of the ions from each microscale measuring point (60) providing the chemical information on the composition of the sample.

2. Method for analysis according to claim 1, **characterised in that** the multidimensional information obtained, namely topography, location-dependent chemical distribution and chemical composition, is evaluated using software and visualised in multidimensional representations.

3. Method for analysis according to claim 1 or 2, **characterised in that** output signals of the light detector or sensor control the device in scanning mode, whereby a rasterisation and a determination of the topography is carried out by evaluating the z-coordinate.

4. Method for analysis according to one of claims 1 to 3, **characterised in that** the position of the sliding table is specifically changed by the control unit (30) in order to implement the scanning operation.

5. Method for analysis according to one of claims 1 to 4, **characterised in that** the position of the focusing system (11) for focusing the radiation of the energy source (20, 10) is specifically changed by the control unit (30) in order to implement the scanning operation.

6. Method for analysis according to one of claims 1 to 5, **characterised in that** raw mass spectrometric data are obtained from the substances to be examined.

7. Method according to one of claims 1 to 6, **characterised in that** a multidimensional data matrix is generated by assigning the calculated mass-to-charge number centroids, intensities and Cartesian coordinates to each detected mass spectrometric signal.

8. Method for analysis according to one of claims 1 to 7, **characterised in that** the height and distribution information is translated into greyscale or colour codes and pictorial representations are generated.

## Revendications

1. procédé d'analyse et d'imagerie par spectrométrie de masse de la surface d'un échantillon avec un dispositif (100, 200) comprenant ,
▪ au moins une source d'énergie (20, 10) pour la désorption ou la désorption et l'ionisation d'atomes ou de molécules de la surface d'un échantillon pour un transfert dans un spectromètre de masse (7),
▪ une table de déplacement (1) qui est conçue de manière à ce qu'un échantillon à examiner puisse y être fixé et où le trajet des rayons de la source d'énergie (20, 10) et la table de déplacement (1) sont réalisés de manière à être mobiles l'un par rapport à l'autre,
▪ une source lumineuse (8, 10),
▪ une unité de commande (30) pour la commande de la table de déplacement (1), de la source d'énergie (20, 10), de la source de lumière (8, 10), celle-ci étant conçue de telle sorte que la surface d'un échantillon peut être irradiée ponctuellement en un point de mesure (60) par la source d'énergie (20, 10) et la source de lumière (8, 10),
▪ une interface (50) pour pouvoir échanger des données avec un spectromètre de masse, l'interface (50) étant conçue de telle sorte que des données de mesure sur la composition chimique de la surface de l'échantillon en un point de mesure (60) peuvent être transmises par un spectromètre de masse à l'unité d'évaluation par l'intermédiaire de l'interface (50), de sorte que la composition chimique du point de mesure (60) peut être déterminée par l'unité d'évaluation (40),
**▪** le dispositif (100, 200) comprenant en outre un premier système optique (3), un détecteur de lumière (4) et une unité d'évaluation (40), et
▪ la source de lumière (8, 10), le premier système optique (3) et le détecteur de lumière (4) étant conçus de telle sorte que la source de lumière (8, 10) éclaire un point de mesure (60) sur un échantillon par l'intermédiaire d'un deuxième système optique (12) et que la lumière réfléchie ou diffusée par le point de mesure (60) peut être détectée par le détecteur de lumière (4) avec le premier système optique (3) monté en amont, et
a) en ce qu'un échantillon à examiner est placé sur la table de déplacement (1), l'échantillon se trouvant sur un support d'échantillon sur la table de déplacement (1),
b) en ce que l'échantillon à examiner est examiné par déplacement de la table de déplacement (1) ou de la source d'énergie (20, 10) de manière ponctuelle en mode de balayage pas à pas ou en mouvement continu,
c) un plan de travail de l'objet étant défini pour cet examen par balayage à l'échelle microscopique,
d) un point de mesure (60) à l'échelle microscopique étant généré par la source lumineuse (8, 10) et reproduit sur l'échantillon par le deuxième système optique (12),
e) le faisceau de mesure réfléchi/diffusé par la source lumineuse (8, 10) étant reproduit sur le détecteur de lumière (4) par le premier système optique (3),
f) la position de l'image du point de mesure sur le détecteur de lumière (4) étant évaluée par l'unité d'évaluation (40), et
g) la modification relative de la position du point de mesure étant calculée et l'écart de la position z par rapport au plan de travail défini de l'objet étant calculé à partir de cette information de l'objet est calculé,
h) qu'à l'aide de cet écart, la position z actuelle de l'objet au point de mesure (60) est déplacée dans le plan de travail prédéfini,
i) la valeur de déplacement étant enregistrée comme information de hauteur pour le point de mesure (60),
j) en ce qu'une information chimique composition chimique du point de mesure (60) est enregistrée sur la surface de l'objet avec une méthode de détection,
k) le faisceau de désorption de la source d'énergie (20, 10) étant utilisé - après l'approche du plan de travail pour le point de mesure (60) - pour désorber et ioniser le matériau à analyser à partir du point de mesure (60) à l'échelle microscopique ou pour l'ioniser dans une étape suivante, et
l) les ions se déplaçant vers un canal de guidage d'ions (6) du spectromètre de masse (7), le canal de guidage d'ions (6) étant adapté pour guider les ions libérés de la surface d'un échantillon par la source d'énergie (20, 10), et
m) qu'après le tramage de la surface de l'échantillon par déplacement de la table de déplacement (1) dans les directions x et y et par régulation de la coordonnée z pour chaque point de mesure (60), la topographie de la surface de l'échantillon est représentée par évaluation de la coordonnée z, l'analyse par spectrométrie de masse des ions de chaque point de mesure (60) à l'échelle microscopique fournissant l'information chimique sur la composition de l'échantillon.

2. Procédé d'analyse selon la revendication 1, **caractérisé en ce que** l'information multidimensionnelle obtenue, notamment la topographie, la distribution chimique en fonction de la localisation et la composition chimique, est évaluée à l'aide d'un logiciel et visualisée dans des représentations multidimensionnelles.

3. Procédé d'analyse selon la revendication 1 ou 2, **caractérisé en ce que** des signaux de sortie du détecteur de lumière ou du capteur commandent le dispositif en mode de balayage, un tramage et une détermination de la topographie étant effectués au moyen de l'évaluation de la coordonnée z.

4. Procédé d'analyse selon l'une des revendications 1 à 3, **caractérisé en ce que**, pour réaliser le mode de balayage, la position de la table de déplacement est modifiée de manière ciblée par l'unité de commande (30).

5. Procédé d'analyse selon l'une des revendications 1 à 4, **caractérisé en ce que**, pour réaliser le mode de balayage, la position du système de focalisation (11) pour focaliser le rayonnement de la source d'énergie (20, 10) est modifiée de manière ciblée par l'unité de commande (30).

6. Procédé d'analyse selon l'une des revendications 1 à 5, **caractérisé en ce que** des données brutes de spectrométrie de masse sont obtenues à partir des substances à analyser.

7. Procédé selon l'une des revendications 1 à 6, **caractérisé en ce qu'**une matrice de données multidimensionnelle est générée en associant à chaque signal de spectrométrie de masse détecté les centroïdes masse/nombre de charges, les intensités et les coordonnées cartésiennes calculés.

8. Procédé d'analyse selon l'une des revendications 1 à 7, **caractérisé en ce que** les informations de hauteur et de répartition sont traduites en codes de niveaux de gris ou de couleurs et **en ce que** des représentations imagées sont générées.
